## Europäisches Patentamt
## European Patent Office
## Office européen des brevets

(19)

(11) Publication number: **0 186 986**
**B1**

(12)
# EUROPEAN PATENT SPECIFICATION

(45) Date of publication of the patent specification: 19.04.89

(51) Int. Cl.⁴: **B 65 G 21/14**

(21) Application number: **85308934.0**

(22) Date of filling: **09.12.85**

(54) Conveyor.

(30) Priority: **12.12.84 GB 8431291**

(43) Date of publication of application: **09.07.86 Bulletin 86/28**

(45) Publication of the grant of the patent: **19.04.89 Bulletin 89/16**

(84) Designated Contracting States: **DE FR GB IT**

(56) References cited:
**EP-A-0 104 142**
**FR-A-2 430 904**
**GB-A-1 576 718**
**GB-A-2 132 151**
**US-A-4 155 441**

(73) Proprietor: **THURNE ENGINEERING CO LTD, Delta Close St. Faiths Industrial Estate, Norwich Norfolk NR6 6BG (GB)**

(72) Inventor: **Antonissen, Peter, The Old Forge Oulton, Aylesham Norfolk (GB)**

(74) Representative: **Rackham, Stephen Neil, GILL JENNINGS & EVERY 53- 64 Chancery Lane, London WC2A 1HN (GB)**

EP 0 186 986 B1

## Description

This invention relates to a conveyor for conveying and positioning precisely, products that are thin and flexible and especially slightly sticky products that cannot be pushed by a kerb into a required position. Examples of such products are mainly food products such as sliced meat and meat products, sliced cheese and fragile and delicate pastries. In moving such products on conveyors when transferring the product from one conveyor to another it is desirable that the product is subjected to as small a change as possible so that the join between the two conveyors is minimised to the maximum possible extent. Thus, as far as possible the two conveyors should be at the same height and should present to the product a surface which is as continuous as possible. Since the products cannot be pushed by a kerb, when it is required to locate a product in a particular position for a downstream operation, for example, placed in an exact position for a downstream packaging operation, it is essential that the product is placed in precisely the correct position on an input conveyor leading to the packaging machine.

One example of such a conveyor is shown in US-A-4 155 441. This specification describes what is known as a Z-conveyor in which a conveying band includes a generally horizontally extending portion along which articles are carried and which, at its downstream end is supported by a first idler roller. The first idler roller and a second idler roller are carried by a movable carriage which is capable of movement backwards and forwards and the conveying belt describes a serpentine or Z-shaped path around the first and second idler rollers. The conveying band also passes around a driven roller the axis of which is fixed in space and other idler rollers the axes of which are fixed in space. With such an arrangement the first idler roller which defines the downstream end of the portion of the conveyor on which the articles are carried is movable backwards and forwards and this is movable irrespective of the movement of the conveying band. In this way the conveying band can, in effect be removed from beneath an article to drop it into a package or to drop the article onto a further conveyor.

This type of conveyor requires a double flexing conveying band since the conveyor is bent in opposite senses around the first and second idler rollers but, a more important disadvantage, particularly in the handling of food products, is that the conveying surface of the conveying band is in contact with the second idler roller. This makes it very difficult to keep its conveying surface free from contamination and causes rapid spreading of any contamination over the entire conveying surface of the conveying band.

The conveying band of such a conveyor has to pass around the serpentine path and to enable it to do so the friction at each turning point must be reduced to the greatest possible extent. This means that it is essential to provide a roller at the downstream end of the conveying portion and this represents a further disadvantage. Whilst the diameter of such a roller is reduced as far as practical there is still a tendency for soft flexible articles such as slices of meat or a meat product to wrap around the downstream end of such a conveyor. If this occurs they then get trapped between the conveying surface of the conveying band and the second idler roller. This, at very least, destroys the product being carried and contaminates the conveying surface and sometimes jams the conveyor and prevents its further operation. With fragile articles such as delicate pastries the roller increases the height from which they are dropped from the conveying surface to the container or conveyor leading to a packaging machine.

According to a first aspect of this invention a conveyor comprises a conveying band which extends around a driven roller driven by a drive and a support, the driven roller and the support both being mounted on a movable carriage, which is movable backwards and forwards in the direction of movement of an upper carrying surface of the conveying band, the drive for the conveying band including a driven pulley which is mounted on the movable carriage and which is coupled to the driven roller, a drive pulley and an idler pulley which are mounted on stationary supports and a drive belt passing around the driven pulley, the drive pulley and the idler pulley, the arrangement being such that movement of the carriage superimposes on the driving pulley and hence on the driven roller a rotation in addition to that caused by rotation of the drive pulley and this, in turn, superimposes a linear movement on the carrying surface of the band equal but opposite to that of the carriage so that the movement of the carrying surface of the band relative to a point fixed in space corresponds precisely to that imparted by the drive pulley to the belt.

The driven belt may be a toothed belt and, in this case, the driven pulley mounted on the movable carriage is a toothed pulley which meshes with the drive belt. Naturally idler pulleys may be provided which are also mounted on the movable carriage to ensure that the drive belt does not slip with respect to the driven pulley. Preferably however the drive belt is arranged with a re-entrant portion and both the driven pulley and an idler pulley are mounted on the movable carriage. In this case the drive belt describes a serpentine path around the driven and idler pulleys mounted on the movable carriage.

The conveying band may be formed by a number of separate ribbons but preferably it is formed by a single continuous belt. In this case the support is preferably a knife edge and preferably this knife edge is located at the downstream end of the conveying band. The use of a knife edge prevents the typical products with which this invention is used, for example, slices of meat and meat products and slices of other food products, from remaining in contact with and following the conveying band around the support at the downstream end of the conveyor. The use of a knife edge as the support also means that the difference in height between the upper surface of the conveying band and the upper surface upon which the product is deposited are both at substantially the same height.

Means may be provided to raise and lower the support so that, when it is required to discharge a product from the downstream end of the conveying band, the support is moved down substantially into contact with the surface upon which the product is to be deposited.

By using a conveyor in accordance with this invention a product located at the downstream end of the conveyor can be deposited more or less vertically by moving the movable carriage, and hence the support and downstream edge of the conveying band, rearwards so pulling the conveying band from beneath the product and depositing it more or less vertically downwards into a precisely defined location. In this way the sticky or fragile nature of a product carried by the conveyor does not prevent the product being deposited in a precisely defined position.

One particular use of a conveyor in accordance with the first aspect of this invention is as part of a biaxial alignment device in which a stream of products which are irregularly spaced from one another and irregularly spaced from the edge of an input conveyor are located at a predetermined pitch with respect to one another and at a precisely determined position with respect to the edge of an output conveyor.

According to a second aspect of this invention such a biaxial alignment device includes a first conveyor in accordance with the first aspect of this invention which receives products from an input conveyor, a sensor mounted at the downstream end of the first conveyor, means to control the operation of the first conveyor to stop the movement of its drive belt as soon as a product reaches a predetermined position adjacent the downstream end of the first conveyor, a second conveyor arranged to move transversely with respect to the input and first conveyor, a second product sensor to detect the presence of a product at the downstream end of the second conveyor, and means to control the operation of the second conveyor in response to the second sensor.

Thus, with the arrangement in accordance with the second aspect of this invention products from the input conveyor are transferred onto the first conveyor and the first conveyor is operated with its movable carriage in its furthest forward position until the product is detected by the first sensor. At this point, the movement of the conveying band of the first conveyor is stopped and the leading edge of the product is thus at a precisely predetermined position. The movable carriage of the first conveyor is then moved rearwards to deposit the product on the second conveyor. Since the second conveyor is in a transverse direction to the first conveyor the product is thus located at a precisely predetermined position with respect to the edge of the second conveyor. The second conveyor is then operated to move the product towards the second sensor. As soon as the product reaches the second sensor it is again in a precisely predetermined position and, as soon as it is detected by the second sensor the product is in a known position both in the direction of feed of the second conveyor and with respect to the edge of the second conveyor. Thus, the product is then at a predetermined, known position and the second conveyor is then simply controlled to transfer the product to the output conveyor to locate the product at a predetermined position on an output conveyor.

To increase the capacity of the biaxial alignment device a number of second conveyors may be provided mounted on a turntable located in an upright plane for rotation about a horizontal axis. In this way, as soon as the product has been located on the second conveyor the turntable is indexed around one position to move that second conveyor away from the first conveyor and bring another second conveyor into position adjacent the downstream end of the first conveyor. Then, whilst a further product is being located on the second of the second conveyors the first of the second conveyors is discharging its products onto the output conveyor.

In addition, one or more transfer conveyors may be provided between the second conveyor or conveyors and the output conveyor. The transfer conveyors may simply be provided to match the feed speed of the product from the second conveyor to that of the output conveyor and this is especially useful when the output conveyor has a fixed speed. Alternatively, the transfer conveyors may move transversely to create, for example, more than one lane of products on the output conveyor. In this case the transfer conveyor is preferably formed in two parts the first part of which moves transversely and the second part of which is divided into as many separate side-by-side conveyors as lanes of product that are required.

Various examples of conveyors in accordance with this invention will now be described with reference to the accompanying drawings in which:

Figure 1 is a side elevation of a first conveying system for depositing products in three separate lanes;
Figure 2 is a plan view of the principle conveyor;
Figure 3 is a side elevation of the drive arrangement of the main conveyor;

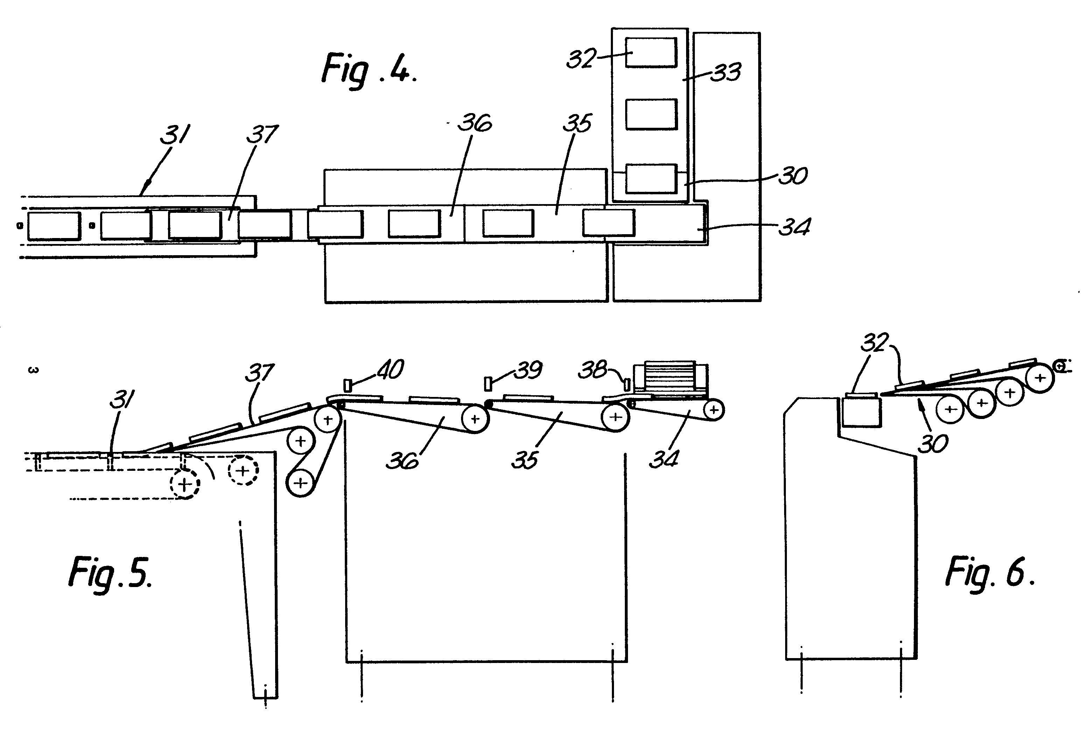

Figure 4 is a plan of a second example which acts as a biaxial product aligner;
Figure 5 is a front elevation of the second example;

Figure 6 is an end elevation;

Figure 7 is a perspective view of a second example of biaxial aligner; and,

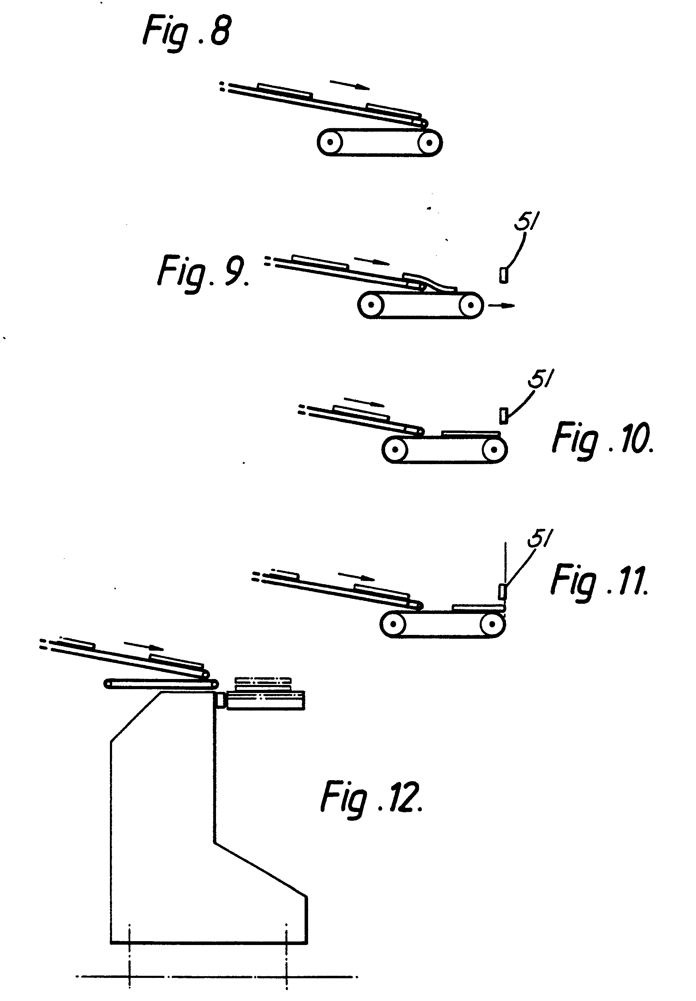

Figures 8 to 12 are a series of diagrammatic end elevations showing how a product is transferred from an input conveyor through the first to the second conveyor.

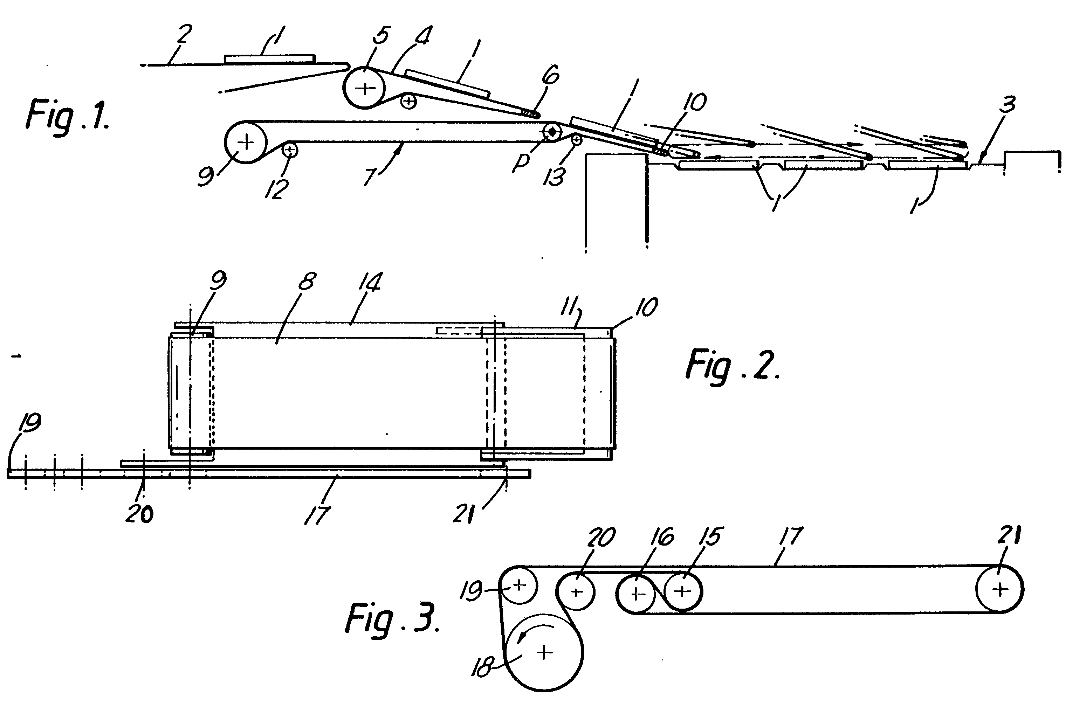

In the first example of a conveying system in accordance with this invention products 1 are transferred from an input conveyor 2 and formed into three lanes on output conveyor 3. The output conveyor may lead, for example, to a vacuum packaging machine and the products 1 may typically be slices, or shingles of slices, of meat or a meat product. The products 1 are initially transferred from the input conveyor 2 to a transfer conveyor 4 having a driven roller 5 and a downstream knife edge 6 and are then transferred to a positioning conveyor 7. The positioning conveyor 7 which is shown in more detail in Figure 2, consists of a conveying belt 8 extending between a driven roller 9 located at its upstream end and a knife edge 10 located at its downstream end. The knife edge 10 is mounted on a pivoted frame 11 which is pivoted about an axis P by, for example, a pneumatic piston and cylinder assembly (not shown) so that the knife edge 10 moves upwards and downwards. Idler rollers 12 and 13 tension the conveyor belt 8 and, preferably engage the inside face of the belt so that no roller engages the conveying surface of the belt, however they are shown in the less-preferred position in figure 1.

The rollers 9, 12 and 13 and the knife edge 10 are all mounted on a movable carriage 14 which is movable backwards and forwards in the direction of movement of the belt 8 by a pneumatic ram, not shown. A driven pulley 15 is connected directly to the roller 9 and has a working diameter identical to that of the roller 9. An idler roller 16 is also rotatably mounted on the movable carriage 14 and a drive belt 17 is connected between a drive pulley 18 idler pulleys 19, 20, and 21 and the pulleys 15 and 16 as shown in Figure 3. The pulley 18 is driven, for example, by an electric motor.

Assuming that the drive pulley 18 is stationary, the driving belt 17 is stationary and does not move around the pulley 20. However, if the carriage 14 is moved forwards with the drive pulley 18 stationary, the pulley 15 is caused to rotate counterclockwise by the driving belt 17 and rotates the roller 9 to move the upper carrying surface of the belt 8 backwards relative to the frame 14 at the same speed as the carriage 14 moves forwards. Thus the carrying surface of the belt 8 remains stationary relative to a point fixed in space. If the carriage 14 is moved backwards, the pulley 15 is rotated clockwise and again the carrying surface of the belt 8 remains stationary relative to a point fixed in space. In either case, the roller 9 is rotated by the movement of the belt 8 relative to the frame 14 and the belt 8 moves around the knife edge 10. When, as happens in practice, the drive pulley 18 rotates, the carrying surface of the belt 8 moves relative to a point fixed in space at the peripheral speed of the drive pulley 18, irrespective of the movement of the carriage 14. This is because, for the reasons just explained, the driven pulley (15) has a rotation superimposed upon it, in addition to that caused by the rotation of the driving pulley (18), by the movement of the carriage 14, and this superimposed rotation produces a peripheral speed of the pulley (15) and of the roller (9) equal to that of the carriage (14) and hence a linear movement of the carrying surface of the band (8) equal but opposite to that of the carriage (14).

In use, assuming that a regularly spaced array of products are moving along the input conveyor 2 the intermediate conveyor 4 operates at the same speed as the conveyor 2 so that the products are transferred via the conveyor 4 and move onto the belt 8 of the coveyor 7. Initially the belt 8 is moved at the same speed as the belt 2 so that the products are moved onto the belt 8. As the products are moved onto the belt 8 the carriage 14 is moved from its left hand position as shown in Figure 1 towards the right. Products build up on the belt 8 until they are located generally over the conveyor 3. The knife edge 10 is lowered and the drive pulley 18 is stopped. In this position there is only a very small distance between the carrying surface of the belt 8 at its downstream end and the top surface of the conveyor 3. The carriage 14 then moves rapidly leftwards as shown in Figure 1. This deposits the products 1 onto the three lanes of the output conveyor 3 since, the belt 8 does not move in space but the carriage 14 moves away from the conveyor 3 so, in effect, peeling the conveyor 8 away from underneath the products 1 and allowing them to drop onto the output conveyor 3.

To vary the spacing of the products between the input conveyor 2 and the required lane spacing on the conveyor the apparatus may include sensors to detect the products approaching the downstream end of the conveyor 2, and the downstream end of the conveyor 4. The conveyor 4 is then operated to, for example, reduce the spacing between adjacent products from the conveyor 2 by transferring the products 1 from the conveyor 2 to the conveyor 4 and then, disabling the drive of the conveyor 4 until the next product approaches the end of the conveyor 2. Alternatively to increase the spacing between the products the movement of the conveyor 4 is accelerated between two adjacent products. In both of these cases during the transfer of a product from the input conveyor 2 to the conveyor 4 both conveyors move at identical speeds. Naturally it is also possible to carry out a further adjustment on the pitch of the produts as they are transferred from the conveyor 4 to the conveyor 7 and to drive the conveyor 7 via the belt 17 whilst the carriage 14 is moved rearwards.

A second example in accordance with this invention acts as a biaxial aligner. This example includes a positioning conveyor 30 which is generally similar to the positioning conveyor 7 of the first example and is used for providing a regular evenly spaced feed to a flighted output conveyor 31 which leads to a packaging machine from an input stream of products 32 arriving on an input conveyor 33. The products 32 from an input conveyor 33 are transferred on to the conveyor 30 and located in a predetermined position on the conveyor 30 by a method which will be described in detail subsequently with reference to the third example. The conveyor 30 then moves rearwards to deposit the products 32 in precisely defined positions relative to the edge of a second conveyor 34. The products are then fed from the second conveyor 34 to transfer conveyors 35 and 36 and thence to a further transfer conveyor 37 from which they are deposited onto the flighted output conveyor 31. Each transfer conveyor 34, 35, and 36 includes a sensor 38, 39 and 40 located at its downstream end. The operation of the transfer conveyors 34, 35 and 36 are controlled in response to the output of the sensors 38, 39 and 40 to provide the required pitch of products on the transfer conveyor 37. The conveyors are operated at different speeds to reduce, or increase, the pitch between adjacent products 32 when a product is not being transferred between them to ensure that the products are at the appropriate pitch on conveyor 37.

The third example of the conveyor in accordance with the invention also carries out a biaxial alignment and, in this example, an irregularly spaced stream of products 40 arriving in a random alignment on an input conveyor 41 are aligned precisely and oriented with respect to one another so that an output on output conveyor 42 consists of three accurately positioned lanes of products 40. This example includes a positioning conveyor 44 substantially identical to the conveyor 7 described in the first example and this feeds products 40 onto one of four second conveyors 45 which are mounted on a turntable 46 which lies in a vertical plane and rotates about a horizontal axis. From the second conveyors 45 the products are fed to a transversely movable second conveyor 47 and thence to one of three independently movable conveyors 48, 49 and 50 which are generally aligned with the output conveyor 42.

The products 40 have an irregular pitch on the input conveyor 41 and are not located at a uniform distance from the edge of the input conveyor 41. The products are transferred onto the conveyor 44. The movable carriage of the conveyor 44 is moved forwards whilst the product is being transferred, as shown in Figure 9, until it reaches its maximum forwards position. Movement of the belt of the conveyor 44 continues until the product reaches a predetermined position adjacent the end of the conveyor 44. The location of the product 40 in this position is detected by a sensor 51 shown only in Figures 9, 10 and 11 and as soon as the sensor 51 has detected the presence of the product 40 the belt of the conveyor 44 is momentarily stopped. The carriage of the conveyor 44 is then moved backwards to deposit the product 40 onto the transfer conveyor 45. As soon as the product has left the conveyor 44 the movement of the belt is restarted to receive the next product 40.

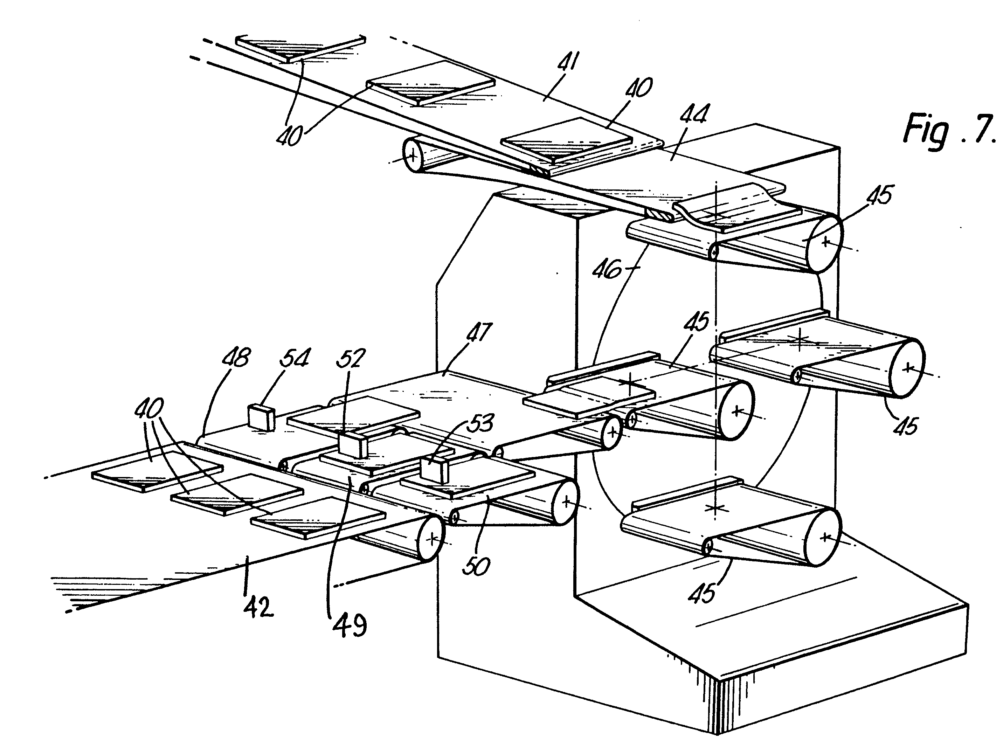

The turntable 46 is indexed forwards by a quarter of a turn, that is anticlockwise as seen in Figure 7, to move the second conveyor 45 containing a product 40 into a position in which the second conveyor 45 is adjacent the transfer conveyor 47. The product 40 is in a precisely aligned position before it is transferred from the positioning conveyor 44 to the second conveyor 45 and hence the product 40 is now located at a precisely defined location with respect to the edge of the second conveyor 45. Assume that, initially, the transversely movable transfer conveyor 47 is to its leftmost position as seen in Figure 7 then the conveyors 45 and 47 move together at the same speed to transfer the product 40 from the conveyor 45 onto the right hand side of the transfer conveyor 47. As soon as the product has moved completely onto the transfer conveyor 47 the turntable 46 is able to rotate through a further quarter turn to bring the following product on the following second conveyor 45 into position adjacent the transfer conveyor 47. The transfer conveyor 47 meanwhile continues to move as does the middle transfer conveyor 49 to feed the product 40 onto the middle conveyor 49 and again the two conveyors 47 and 49 move at the same speed. As the following second conveyor 45 moves into position adjacent the transfer conveyor 47 the product from the following second conveyor 45 is simultaneously transferred onto the transfer conveyor 47. It does not matter that this occurs at the same time since the velocity of all the conveyors 45, 47, 48, 49, and 50, are matched.

As soon as the product 40 on the conveyor 49 reaches a precisely determined position as monitored by the sensor 52 the conveyor 49 is stopped. As soon as the following product 80 has left the second conveyor 45 and is completely on the conveyor 47 this is moved transversely to the right as shown in Figure 7 into the position as shown in Figure 7. Further movement of the conveyor 47 together with the transfer conveyor 48 then transfers the product 40 onto the conveyor 48. Meanwhile a further product 40 is being received by the left hand end of the transfer conveyor 47. The conveyor 48 is stopped as soon as the product reaches its associated sensor 54. As soon as the following product is wholly received on the transfer conveyor 47 it is moved to the left so that the following product 40 it carries is aligned with the transfer conveyor 50 and then is transferred on to conveyor 50 as a further product is transferred onto its right hand end. As soon as the sensor 53 detects the product on the conveyor 50, the conveyors 48, 49 and 50 all move together to move the products 40 from the conveyors 48, 49 and 50 onto the conveyor 43. The process is then repeated for each row of products on the output conveyor 42.

## Claims

1. A conveyor comprising a conveying band (8) which extends around a driven roller (9) driven by a drive and a support (10), the driven roller (9) and the support (10) both being mounted on a movable carriage (14), which is movable backwards and forwards in the direction of movement of an upper carrying surface of the conveying band (8), the drive for the conveying band (8) including a driven pulley (15) which is mounted on the movable carriage (14) and which is coupled to the driven roller (9), a drive pulley (18) and an idler pulley (20) which are mounted on stationary supports and a drive belt (17) passing around the driven pulley (15), the drive pulley (18) and the idler pulley (20), the arrangement being such that movement of the carriage (14) superimposes on the driving pulley (15) and hence on the driven roller (9) a rotation in addition to that caused by rotation of the drive pulley (18) and this, in turn, superimposes a linear movement on the carrying surface of the band (8) equal but opposite to that of the carriage (14) so that the movement of the carrying surface of the band (8) relative to a point fixed in space corresponds precisely to that imparted by the drive pulley (18') to the belt (17).

2. A conveyor according to claim 1, in which the driven belt (17) is a toothed belt and, the driven pulley (18) mounted on the movable carriage (14) is a toothed pulley which meshes with the drive belt.

3. A conveyor according to claim 1, in which the drive belt (17) is arranged with a re-entrant portion and both the driven pulley (15) and an idler pulley (16) are mounted on the movable carriage (14), the drive belt (17) describing a serpentine path around the driven (15) and idler (16) pulleys mounted on the movable carriage (14).

4. A conveyor according to any one of the preceding claims, in which the conveying band is formed by a single continuous belt (8) and the support is a knife edge (10) located at the downstream end.

5. A conveyor according to claim 4, in which means are provided to raise and lower the knife edge (10) so that, when it is required to discharge a product carried by the conveying band (8) from its downstream end, the support (10) is moved down substantially into contact with a surface upon which the product is to be deposited.

6. A biaxial alignment device comprising a first conveyor (30) in accordance with any one of the preceding claims, which receives products from an input conveyor (33), a sensor (51) mounted at the downstream end of the first conveyor (30), means to control the operation of the first conveyor to stop the movement of its drive belt as soon as a product reaches a predetermined position adjacent the downstream end of the first conveyor, a second conveyor (34) arranged to move transversely with respect to the input (33) and first conveyor (30), a second product sensor (38) to detect the presence of a product at the downstream end of the second conveyor (34), and means to control the operation of the second conveyor in response to the second sensor.

7. A biaxial alignment device according to claim 6, which includes a number of second conveyors (45) mounted on a turntable (46) located in an upright plane for rotation about a horizontal axis.

8. A biaxial alignment device according to claim 6 or 7, including one or more transfer conveyors (35, 36 or 47, 48, 49, 50) provided between the second conveyor or conveyors and an output conveyor (31, 43).

9. A biaxial alignment device according to claim 8 when dependent upon claim 7, in which the transfer conveyor (47) moves transversely to create more than one lane of products on the output conveyor (43).

10. A biaxial alignment device according to claim 9, in which the transfer conveyor is formed in two parts, a first part (47) which moves transversely and a second part (48, 49, 50) which is divided into as many separate side-by-side conveyors as lanes of product that are required.

## Patentansprüche

1. Förderer, umfassend ein Förderband (8), das sich um eine Antriebsrolle (9) herum erstreckt und durch einen Antrieb und einen Träger (10) angetrieben wird, wobei die Antriebsrolle (9) als auch der Träger (10) auf einem beweglichen Wagen (14) befestigt sind, der vor- und rückwärts in Richtung der Bewegung einer oberen Tragfläche des Förderbandes (8) bewegbar ist, wobei der Antrieb für das Förderband (8) eine angetriebene Riemenscheibe (15) umfaßt, die auf dem beweglichen Wagen (14) befestigt und mit der Antriebsrolle (9) gekoppelt ist, sowie eine Antriebsriemenscheibe (18) und eine Leerlaufriemenscheibe (20), die auf stationären Lagern gelagert sind, und einen Antriebsgürtel (17), der um die angetriebene Riemenscheibe, die Antriebsriemenscheibe (18) und die Leerlaufriemenscheibe (20) herumgeführt ist, wobei die Anordnung derart ausgelegt ist, daß die Bewegung des Wagens (14) eine Drehung der angetriebenen Riemenscheibe (15) und dadurch der Antriebsrolle (9) überlagert, zusätzlich zu der, die durch die Drehung der Antriebsriemenscheibe (18) bewirkt wird, und dieses wiederum überlagert eine gleiche Linearbewegung der Tragfläche des Bandes (8), jedoch entgegengesetzt zu der des Wagens (14), so daß die Bewegung der Tragfläche des Bandes (8) relativ zu einem im Raum fest liegenden Punkt genau der entspricht, die durch die Antriebsriemenscheibe (18') dem Gürtel (17) verliehen wird.

2. Förderer nach Anspruch 1, bei dem der Antriebsgürtel (17) ein Zahnriemen ist, und die Antriebsriemenscheibe (18), die auf dem beweglichen Wagen (14) befestigt ist, eine gezahnte Riemenscheibe ist, die paßgerecht für den Antriebsgürtel ist.

3. Förderer nach Anspruch 1, bei dem der Antriebsgürtel (17) mit einem Wiedereintrittsteil versehen ist, und wobei sowohl die angetriebene Riemenscheibe (15) und eine Leerlaufriemenscheibe (16) auf dem beweglichen Wagen (14) befestigt sind, wobei der Antriebsgürtel (17) einen serpentinenartigen Weg um die angetriebene (15) und die Leerlauf (16)-Riemenscheiben beschreibt, die auf dem beweglichen Wagen (14) befestigt sind.

4. Förderer nach irgendeinem der vorstehenden Ansprüche, bei dem das Förderband durch einen einzigen kontinuierlichen Gürtel (8) gebildet ist, und wobei der Träger eine Messerkante (10) darstellt, die am unterstromigen Ende angeordnet ist.

5. Förderer nach Anspruch 4, bei dem Mittel vorgesehen sind, um die Messerkante (10) anzuheben und zu senken, so daß, wenn es erforderlich ist, ein durch das Förderband (8) getragenes Produkt von seinem unterstromigen Ende zu entladen, der Träger (10) im wesentlichen in Kontakt mit einer Fläche nach unten bewegt wird, auf der das Produkt abgelegt werden soll.

6. Biaxiale Ausrichtungsvorrichtung, umfassend einen ersten Förderer (30) nach irgendeinem der vorstehenden Ansprüche, der Produkte von einem Eingangsförderer (33) aufnimmt, einen Sensor (51), der am unterstromigen Ende des ersten Förderers (30) befestigt ist, Mittel zur Steuerung des Betriebs des ersten Förderers, um die Bewegung seines Antriebsgürtels anzuhalten, sobald ein Produkt eine vorbestimmte Stellung angrenzend an das unterstromige Ende des ersten Förderers erreicht, wobei ein zweiter Förderer (34) angeordnet ist, der sich im Hinblick auf die Eingabe (33) und den ersten Förderer (30) bewegt, einen zweiten Produktsensor (38), um die Gegenwart eines Produktes am unterstromigen Ende des zweiten Förderers (34) zu ermitteln, sowie Mittel zum Steuern des Betriebs des zweiten Förderers, welcher auf den zweiten Sensor anspricht.

7. Biaxiale Ausrichtungsvorrichtung nach Anspruch 6, die eine Anzahl zweiter Förderer (45) umfaßt, die auf einem Drehtisch (46) befestigt sind, der in einer senkrechten Ebene zur Drehung um eine horizontale Achse angeordnet ist.

8. Biaxiale Ausrichtungsvorrichtung nach Anspruch 6 oder 7, einschließlich eines oder mehrerer Überführungsförderer (35, 36 oder 47, 48, 49, 50), die zwischen dem zweiten förderer oder den Förderern und einem AusgabeEörderer (31, 43) vorgesehen sind.

9. Biaxiale Ausrichtungsvorrichtung nach Anspruch 8 in Abhängigkeit von Anspruch 7, bei der sich der Überführungsförderer (47) querverlaufend bewegt, um mehr als eine Bahn der Produkte auf dem Ausgabeförderer (43) zu erzeugen.

10. Biaxiale Ausrichtungsvorrichtung nach Anspruch 9, bei der der Überführungsförderer zweiteilig ausgebildet ist, wobei ein erster Teil (47) sich querverlaufend bewegt und ein zweiter Teil (47, 49, 40) in so viele getrennte, nebeneinanderliegende Förderer geteilt ist, wie Produktbahnen erforderlich sind.

**Revendications**

1. Un convoyeur composé d'une bande de convoyage (8) qui passe autour d'un rouleau mené (9) entraîné par une transmission et un support (10), le rouleau mené (9) et le support (10) étant tous deux montés sur un chariot mobile (14), qui se déplace vers l'arrière et vers l'avant dans le sens de déplacement d'une surface portante supérieure de la bande de convoyage (8), la transmission de la bande de convoyage (8) comportant une poulie menée (15) qui est montée sur le chariot mobile (14) et est accouplée au rouleau mené (9), une poulie de commande (18) et une poulie folle (20) qui sont montées sur des supports stationnaires, et une courroie de transmission (17) qui passe autour de la poulie menée (15), la poulie de commande (18) et la poulie folle (20). Cet agencement, lors du déplacement du chariot (14) vient superposer à la poulie menée (15) puis au rouleau mené (9) une rotation qui vient s'ajouter à celle provoquée par la rotation de la poulie de commande (18), cela, à son tour, superpose un mouvement linéaire à la surface portante de la bande (8) qui est égal mais opposé à celui du chariot (14) de telle sorte que le déplacement de la surface portante de la bande (8) par rapport à un point fixe dans l'espace correspond exactement à celui imparti par la poulie de commande (18) à la courroie de transmission (17).

2. Un convoyeur, conformément à la revendication 1, dans lequel la courroie menée (17) est crantée et la poulie de commande (18) montée sur le chariot mobile (14) est une poulie crantée qui vient s'engrener sur la courroie de transmission.

3. Un convoyeur, conformément à la revendication 1, dans lequel la courroie menée (17) comporte un segment rentrant et sur lequel la poulie menée (15) et une poulie folle (16) sont toutes deux montées sur le chariot mobile (14), la courroie de transmission (17) décrivant une trajectoire qui serpente autour de la poulie menée (15) et de la poulie folle (16) montées sur le chariot mobile (14).

4. Un convoyeur, conformément à l'une des revendications précédentes, dans lequel la bande de convoyage est formée d'une seule bande continue (8) dont le support est formé d'une arête de couteau (10) à l'extrémité aval.

5. Un convoyeur, conformément à la revendication 4, dans lequel sont incorporés des moyens pour relever et abaisser l'arête du couteau (10) de telle sorte que lorsqu'il faut décharger un produit transporté par cette bande de convoyage (8) au niveau de son extrémité aval, le support (10) puisse se déplacer de façon substantielle vers le bas, jusqu'à ce qu'il soit au contact d'une surface sur laquelle le produit doit être déposé.

6. Un dispositif d'alignement biaxial composé d'un premier convoyeur (30) conformément à l'une des revendications précédentes, qui reçoit des produits d'un convoyeur d'entrée (33), un capteur (50) monté à l'extrémité aval du premier convoyeur (31), des moyens de contrôler le fonctionnement du premier convoyeur pour arrêter le déplacement de sa courroie de transmission dès qu'un produit atteint une position prédéterminée à proximité de l'extrémité aval du premier convoyeur, un deuxième convoyeur (34) disposé pour un déplacement transversal par rapport au convoyeur d'entrée (33) et au premier convoyeur (30), un deuxième capteur de produit (38) pour détecter la présence d'un produit à l'extrémité aval du deuxième convoyeur (34) et des moyens de contrôler le fonctionnement du deuxième convoyeur en réponse au deuxième capteur.

7. Un dispositif d'alignement biaxial conformément à la revendication 6, qui se compose d'un certain nombre de deuxièmes convoyeurs (45) montés sur un plateau tournant (46) disposé dans un plan vertical en vue d'une rotation autour d'un axe horizontal.

8. Un dispositif d'alignement biaxial, conformément à la revendication 6 ou 7, y compris un ou plusieurs convoyeurs de transfert (35, 36 ou 47, 48, 49, 50), disposé entre le ou les deuxième(s) convoyeur(s) et un convoyeur de sortie (31, 43).

9. Un dispositif d'alignement biaxial conformément à la revendication 8, lorsqu'elle dépend de la revendication 7, dans lequel le convoyeur de transfert (47) se déplace dans l'axe transversal pour créer plusieurs trajectoires acheminant des produits sur le convoyeur de sortie (43).

10. Un dispositif d'alignement biaxial, conformément à la revendication 9, dans lequel le convoyeur de transfert se compose de deux parties, une première partie (47) qui se déplace dans l'axe transversal et une deuxième partie (48, 49, 50) qui se divise en de nombreux convoyeurs latéraux séparés qui assurent le nombre requis de trajectoires d'acheminement de produit.

Fig.1.

Fig.2.

Fig.3.

Fig .4.

31   37   36   35   32   33   30   34

EP 0 186 986 B1

Fig.5.

31   37   40   39   38   36   35   34

Fig. 6.

32   30

Fig. 7.

Fig .8

Fig. 9.

5/

Fig .10.

5/

Fig .11.

5/

Fig .12.